# EUROPEAN PATENT APPLICATION

(11) **EP 4 290 394 A1**
(43) Date of publication of application: **13.12.2023**
(21) Application number: 23173751.1
(22) Date of filing: 16.05.2023
(51) Int. Cl.: G06F 16/783

(54) **ENHANCED NATURAL LANGUAGE PROCESSING SEARCH ENGINE FOR MEDIA CONTENT**

(30) Priority: 10.06.2022 US 202217837240
(71) Applicant: Synamedia Limited, Staines Upon Thames, Middlesex TW18 4EX (GB)
(72) Inventor: SHMUEL, Maor, 9987500 Tzur Hadasa (IL); FRUCHTER, Avi, 9090900 Neve Daniel (IL); MENASHEOF, Nurit, 9692126 Jerusalem (IL); LAVRENTIEV, Andrei, 7648109 Rehovot (IL); KALFA, Elad, 9783013 Jerusalem (IL)
(74) Representative: IK-IP LTD

(57) **Abstract**

Techniques for video content searches are described herein. In accordance with various embodiments, a server includes a processor and a non-transitory memory, where the server hosts a natural language processing (NLP) search engine with a model pretrained to derive sentence embeddings. The NLP search engine obtains additional data related to media content. The NLP search engine further provides the additional data to the model to retrain the model, including modifying parameters of the model of the NLP search engine to correlate vectors representing the additional data with the sentence embeddings derived by the model prior to the retraining. The NLP search engine also stores the vectors for searches of the media content.

## Description

### TECHNICAL FIELD

The present disclosure relates generally to multimedia content delivery and, more specifically, to an enhanced natural language processing search engine for media content searches.

### BACKGROUND

Using natural search phrases to locate video assets faces challenges. Previously existing natural language processing (NLP) engines typically rely on tags for media content such as video assets, e.g., titles, synopsis, character names, genre, etc. of movies. However, media content is associated with a rich set of semantics. As such, merely relying on the text from the tags may lead to inaccurate search results, e.g., results that are not in the intended domain.

### BRIEF DESCRIPTION OF THE DRAWINGS

So that the present disclosure can be understood by those of ordinary skill in the art, a more detailed description may be had by reference to aspects of some illustrative embodiments, some of which are shown in the accompanying drawings.
Figure 1 is a block diagram of an exemplary media content search system that uses an enhanced natural language processing (NLP) search engine with model retraining for media content searches, in accordance with some embodiments;
Figure 2 is a diagram illustrating adding domain information to the model of the exemplary enhanced NLP search engine, in accordance with some embodiments;
Figures 3A and 3B are diagrams illustrating modifying the model of the exemplary enhanced NLP search engine, in accordance with some embodiments;
Figure 4 is a diagram illustrating analyzing video content and deriving metadata for retraining the model of the exemplary enhanced NLP search engine, in accordance with some embodiments;
Figure 5 is a diagram illustrating training and retraining the model of the exemplary enhanced NLP search engine upon ingesting videos and video metadata, in accordance with some embodiments;
Figures 6A and 6B are diagrams illustrating exemplary vector spaces before and after retraining the model of the exemplary enhanced NLP search engine based on user feedback, in accordance with some embodiments;
Figures 7A and 7B are flow diagrams illustrating an enhanced NLP search method for video searches, in accordance with some embodiments; and
Figure 8 is a block diagram of a computing device for enhanced media content searches, in accordance with some embodiments.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DESCRIPTION OF EXAMPLE EMBODIMENTS

Numerous details are described in order to provide a thorough understanding of the example embodiments shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example embodiments described herein.

### OVERVIEW

An enhanced natural language processing (NLP) search engine described herein solves the aforementioned problems of locating media assets using a natural search phrase. The enhanced NLP search engine ingests from multiple sources, e.g., including not only tags and/or keywords associated with media content, but also additional data from sources such as content recognition of videos, audio, subtitles, posters, film databases, online knowledge base, etc. Moreover, the enhanced NLP search engine learns from actual searches and views to dynamically update the enhanced NLP engine. The dynamic updates create more associations based on user inputs and/or responses. As a result, a model for the enhanced NLP search engine is retrained using ingested data, which include more information than conventional NLP engine models, as well as user feedback, thus improving correlation of data and improving the accuracy of media content search results.

In some embodiments, the model is a vector generator that creates vectors based on the trained similarities, e.g., based on the similarities among the metadata. As new similarities are added, e.g., domain specific similarities, similarities based on ingested data, and/or similarities based on user inputs, the accuracy of the model improves and the model generates more meaningful vector values for more accurate search results. As such, the solution described herein relies on creating additional descriptions at the time the content is ingested and also retraining the model as new search strings are submitted by end users. Accordingly, the additional data relevant to the media content enable users to search for media content with better results.

In accordance with various embodiments, a media content search method is performed at a device that includes a processor and a non-transitory memory, where the device hosts a natural language processing (NLP) search engine with a model pretrained to derive sentence embeddings. The method includes obtaining additional data related to media content. The method further includes providing the additional data to the model to retrain the model, including modifying parameters of the model of the NLP search engine to correlate vectors representing the additional data with the sentence embeddings derived by the model prior to the retraining. The method also includes storing the vectors for searches of the media content.

### EXAMPLE EMBODIMENTS

A key part of identifying content that a user attempts to describe relies on a model in natural language processing (NLP) for making logical correlations. Previously existing NLP models typically are trained for a specific language and/or use certain types of documents, e.g., publications. Such models do not perform well when searching for media content. For example, tags or titles of movies do not always use terms from English dictionary. Accordingly, using an NLP model trained as a spell checker for media content searches may return results that mistakenly make corrections to a non-English movie title. An enhanced NLP engine described herein addresses the aforementioned issues by using a model that is optimized for media content searches. The enhanced NLP engine thus improves the accuracy and relevancy of media asset search results from a natural language search.

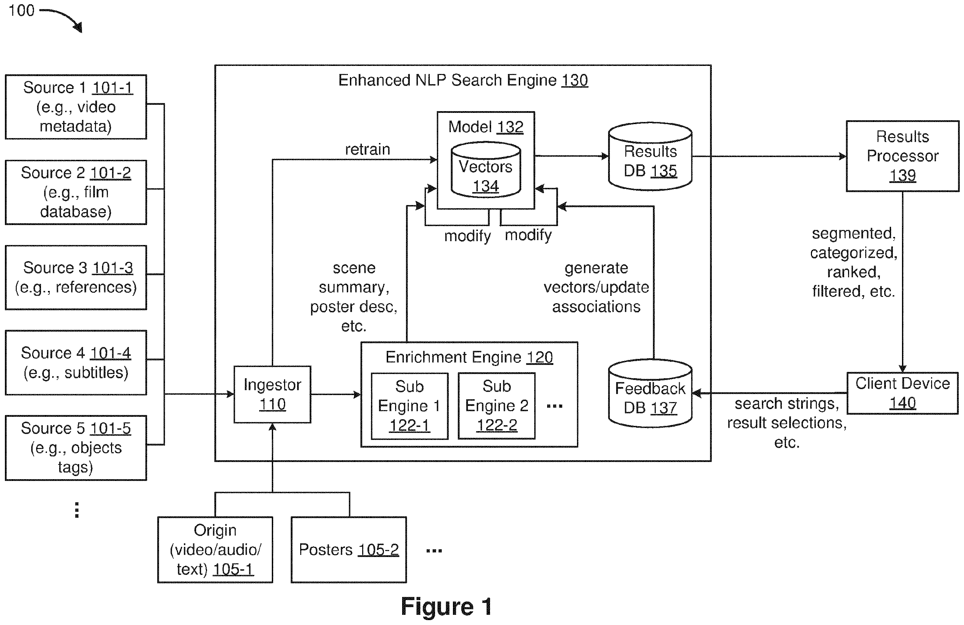

Figure 1 is a diagram illustrating an exemplary media content search system 100 in accordance with some embodiments. In some embodiments, media content, also referred to hereinafter as multimedia content, media asset, or content, includes video, audio, and/or text, etc. In the exemplary media content search system 100, an ingestor 110 of an enhanced NLP search engine (also referred to hereinafter as the "NLP engine" or the "NLP search engine") obtains metadata from a plurality of sources, e.g., source 1 101-1, source 2 101-2, source 3 101-3, source 4 101-4, and source 5 101-5, etc., collectively referred to hereinafter as the plurality of sources 101. For example, source 1 101-1 can be data from a database that provides music, video, and/or sports metadata. In another example, source 2 101-2 can be an online database of information related to films, television series, home videos, video games, and streaming content online, including cast, production crew and personal biographies, plot summaries, trivia, ratings, and/or fan and critical reviews, etc. In still another example, source 3 101-3 can be references, such as dictionaries and/or an online encyclopedia written and maintained by editors through open collaboration. In yet two other examples, source 4 101-4 can be subtitles and/or transcripts from videos, and source 5 101-4 can be packages and/or services using machine learning for image processing in order to recognize objects in the images and providing tags associated with the objects, e.g., facial attribute detection, character recognition, sport player tracking, text detection, social feeds, and/or critics of movies, etc.

Once the ingestor 110 receives the metadata from the plurality of sources 101, the ingestor 110 sends the metadata to other components of the enhanced NLP search engine 130. In some embodiments, the enhanced NLP search engine 130 includes a model 132 that is pretrained, e.g., pretrained in one or more natural languages, and retrained and/or enhanced using the metadata received from the plurality of sources 101 via the ingestor 110. Further, in some embodiments, the model 132 is further retrained and/or enhanced using user inputs and feed backs so that the improved model 132 builds vector representation of text, e.g., generating a plurality of vectors 134 (sometimes also referred to herein as "vectors 134" or "vectors repository 134" for the sake of brevity) that represent text associated with searches.

In some embodiments, the model 132 are pretrained NLP models, e.g., Sentence BERT (SBERT). Bidirectional Encoder Representations from Transformers (BERT) is a transformer-based machine learning technique for NLP pre-training. BERT includes various techniques for pretraining general purpose language representation model. The general purpose pretrained models can then be fine-tuned on smaller task-specific datasets. SBERT is a modification of the pretrained BERT networks that use Siamese and triplet network structures to derive semantically meaningful sentence embeddings, which can then be compared using cosine-similarity for example. Other NLP models can be used in place of or in conjunction with SBERT for the model 132.

As will be described in further detail below, in some embodiments, before retraining, the exemplary system 100 uses general purpose pretrained models as the initial model for the model 132 for deriving sentence embeddings, such as "missing dog". As used herein, a sentence embedding is a collective name for a set of techniques in NLP where sentences are mapped to vectors of numbers. As such, the terms "sentence embedding", "document embedding", "embedding", "vector representation of a document", and "vector" are used interchangeably.

In some embodiments, the model 132 is retrained using additional data, e.g., using the metadata from the ingestor 110 and/or the enrichment engine 120. Once retrained using the metadata, the model 132 learns to associate a movie title such as "Lassie" with the embedding "missing dog", e.g., by adjusting parameters such as weights of the model 132 to establish stronger correlations between "Lassie" and "missing dog". Further, in some embodiments, certain correlations are defined to retrain the model that certain search phrases, e.g., "man bitten by an insect" having a strong correlation to certain media content such as the movie "Spider-man". Additionally, in some embodiments, the enhanced NLP search engine 130 saves the retrained model 132 (e.g., saving the parameters of the model 132) and continues the retraining process as new search phrases received from the feedback database 137.

In some embodiments, the enhanced NLP search engine 130 also saves at least a portion of the output vectors 134 from the retrained model 132 into the results database 135. For example, when a new search, the search phrase is provided into the model 132 to generate an embedding for which the similarity or uniqueness to the existing document embeddings are evaluated, parameters are adjusted, and the closest matches are returned as the results. In another example, good search results, e.g., when a specific movie is selected from a search result, the search phrase and selected movie title are also used to retrain the model 132. With the continued retraining process, the enhanced NLP search engine 130 improves the model 132 for media content searches with each ingested metadata and each user input.

In some embodiments, the ingestor 110 and/or an enrichment engine 120 of the enhanced NLP search engine process additional data about the media content for creating more correlations in the model 132. For example, the ingestor 110 and/or the enrichment engine 120 can obtain the media content from an origin 105-1, e.g., obtaining videos, audio, and/or text. In particular, in some embodiments, when analyzing a movie, the ingestor 110 and/or the enrichment engine 120 segment the movie into chapters. In some embodiments, each chapter is a duration, a logical scene, a change of music, and/or upon identifying black frames, etc. In some embodiments, the ingestor 110 and/or the enrichment engine 120 then process each chapter's audio and/or subtitles to generate short descriptions of the scene (e.g., scene summary) as the additional data. In another example, the ingestor 110 and/or the enrichment engine 120 can obtain movie posters 105-2, e.g., processing images of movie posters, extract text from the processed movie posters, and generate poster descriptions as the additional data.

In some embodiments, to generate the additional text description, the enrichment engine 120 includes several sub engines, e.g., sub engine 1 122-1, sub engine 2 122-1, etc., collectively referred to hereinafter as the sub engines 122. For example, sub engine 1 122-2 can be configured to process text, sub engine 2 122-2 can be configured to process images, and another sub engine (not shown) can be configured to process videos and perform tasks such as extracting context from videos, etc. In another example, sub engine 1 122-1 as a scene summary sub engine can be configured to segment movies into chapters and generate scene summaries, and sub engine 2 122-2 as a poster description sub engine can be configured to process movie posters and generate poster descriptions, etc. In some embodiments, the sub engines 122 receive the additional data (e.g., the multimedia content from the origin 105-1 and/or the movie posters 105-2) from the ingestor 110 and generates the additional text description for updating the model 132 of the enhanced NLP search engine 130, e.g., generating more vectors and/or enhancing the correlations in the model. Using the additional text description derived from the additional data for fine tuning the model thus enables better media content search results.

In some embodiments, the enhanced NLP search engine 130 stores certain search results in a results database 135 and a results processor 139 processes the results before sending the results to a client device 140 for rendering, e.g., segmenting, categorizing, filtering, and/or ranking the results. In some embodiments, the enhanced NLP search engine 130 maintains a feedback database 137 for storing user feedback from the client device 140, e.g., search strings, clicks and/or playbacks of the selected item indicating search result selections, etc. For example, an actual playback of a media content item in the search result for a duration (e.g., longer than a few seconds) indicates a good result and potentially new or revised correlations in the model 132. The feedback data in the feedback database 137 allow the enhanced NLP search engine 130 to learn from the actual searches and views to dynamically update the model 132 and/or create more associations within the model 132 based on the user responses, e.g., generating the vectors 134 and/or updating associations for the model 132. The generated vectors 134 and/or updated correlations in the model 132 allow better media content search results.

In some embodiments, a results processor 139 obtains the results from the enhanced NLP search engine 130, e.g., retrieving from the results database 135, and prepares the results for the client device 140, e.g., segmenting, categorizing, ranking, and/or filtering the results. In some embodiments, because the results can be very long, e.g., many results related to the search phrase, the results processor 139 analyzes the common grouping among the results and dynamically re-groups the list according to detected categories. For example, the results processor 139 can group the search results into categories such as crime movies, filmed in NYC, released in 90's, released in 20's, etc. The grouping helps the user quickly refine their search by selecting the relevant group.

It should be noted that components are represented in the exemplary media content search system 100 for illustrative purposes. Other configurations can be used and/or included in the exemplary media content search system 100. Further, components can be divided, combined, and/or re-configured to perform the functions described herein. For example, at least a portion of the results processor 139 can be part of the enhanced NLP search engine 130, such that the search results returned by the enhanced NLP search engine 130 are segmented, categorized, ranked, and/or filtered. In another example, the ingestor 110 can be a part of the enhanced NLP search engine 130 or as a separate component (e.g., on a separate and/or distinct device) that provides the ingested media content and/or media content metadata to the enhanced NLP search engine 110. In another example, each of the components, e.g., the ingestor 110, the enrichment engine 120, the model 132, the vectors 134, the results database 135, and/or the feedback database 137, can reside on the same server or distribute over multiple distinct servers. Various features of implementations described herein with reference to Figure 1 can be embodied in a wide variety of forms, and that any specific structure and/or function described herein is illustrative.

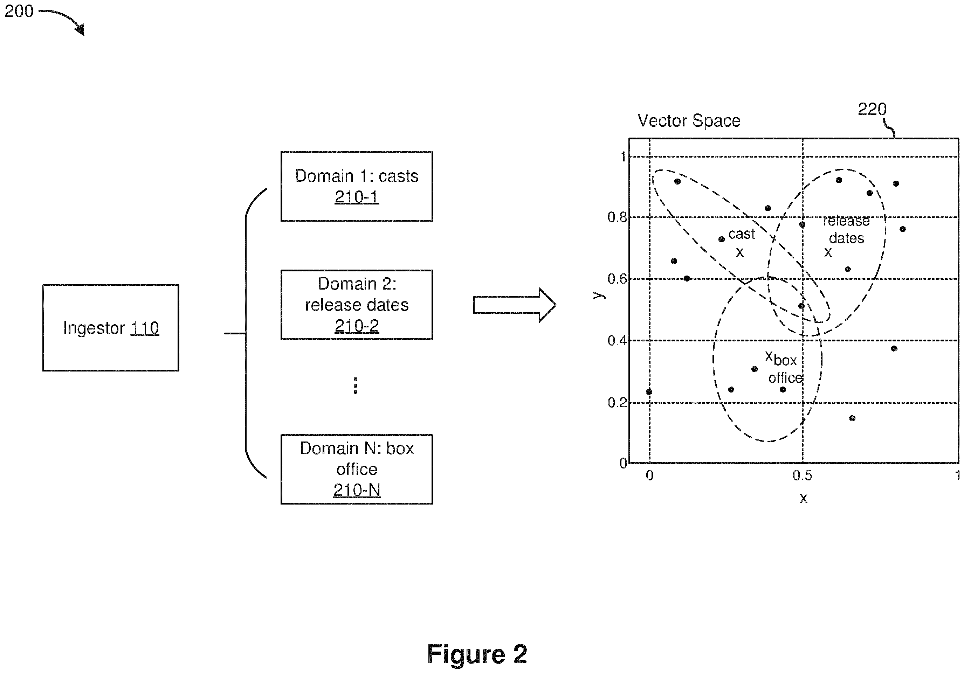

Figure 2 is a diagram 200 illustrating adding domain information to the model 132 of the enhanced NLP searching engine 130 (Figure 1) in accordance with some embodiments. In some embodiments, to return more relevant results, the enhanced NLP search engine relies on domain specific information that is typically good indications for responses to popular searches. For example, based on the information from the sources 101 (Figure 1), e.g., film databases and/or online news, etc. that provide casts, release dates, box office numbers, headlines information, the ingestor 110 extracts such metadata as domains, e.g., domain 1 210-1 based on casts, domain 2 210-2 based on release dates, ..., domain N 210-N based on box office information, collectively referred to hereinafter as the domains 210. Further, the ingestor 110 provides the domains 210 to the model during the initial retraining, so that in a vector space 220, e.g., the vectors 134 in Figure 1, movie assets are associated with different domains and sometimes multiple domains.

For example, movies from different genres are assigned different weights when being associated with the release dates domain 210-2. As such, using the domain information, a search for "new releases" can return a list of newly released movies and the newest released movie in a series of titles, e.g., the latest movie in "Spider-Man", "Spider-Man 2", "Spider-Man 3" series, would be returned. Similarly, movies with famous cast members, e.g., on the front page of multiple recent news outlets, are assigned higher weights when being associated with the casts domain 210-1. As such, when searching for movies based on the name of a cast member, the movies with the cast member mentioned in recent news would be closer to the top of the search results. In another example, the box office number domain 210-N can be used to locate movies that have high box office numbers.

Once the domain information is captured in the model, when a search string a combination of keywords from multiple domains, the enhanced NLP search engine can locate media assets based on the associations with the multiple domains. In previously existing search engines, when a search string is a combination of keyword searches, e.g., "Morgan Freeman has Superpower", previously existing search engines often have difficulties separating the keywords in the search string and merging the search results from different domains. In contrast, using the domain information added in the model, the enhanced NLP search engine can locate movies with "Morgan Freeman" being a cast member according to the casts domain 210-1, merge with results according to a different domain in the vector space 220, e.g., any movies related to superpower including God from a semantic match, and possibly rank by the release dates 210-2 and/or the box office 210-N to generate more search results that are close to the user's intention.

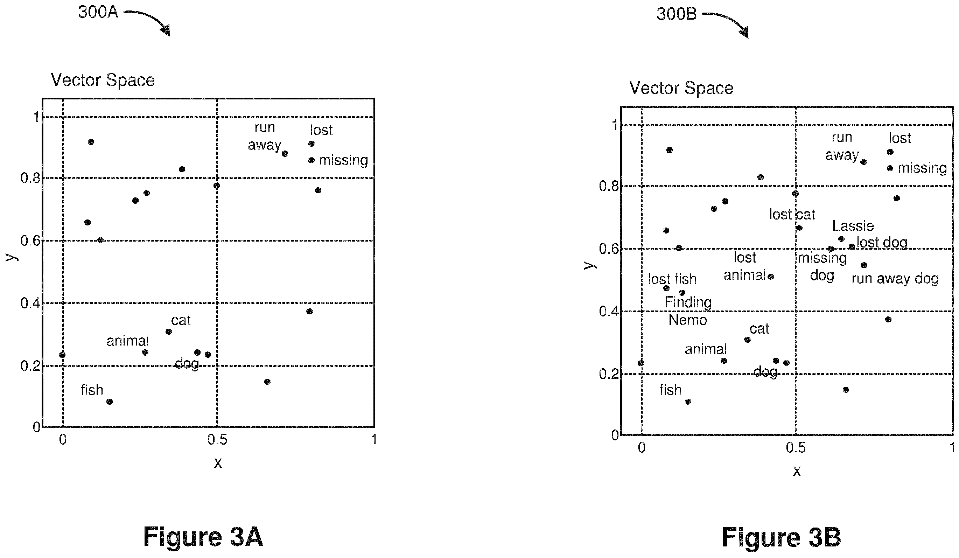

Figures 3A and 3B are diagrams illustrating generating new vectors and establishing new correlations in the model in accordance with some embodiments. In some embodiments, the model of the enhanced NLP search engine 130 is retrained using the descriptions provided by the enrichment engine 120 (Figure 1). For example, in Figure 3A, upon the initial retraining using information ingested from various sources 101 (Figure 1), there is a weak correlation between "dog" and "lost" in the model, e.g., the far distance between the vector representing "dog" and the vector representing "lost" in a vector space 300A indicating the weak correlation. Also in the vector space 300A, vectors representing "cat", "animal", and "fish" are relatively close in distance from the vector representing "dog". The close distance indicates that words such as "cat", "animal", "fish" are somewhat similar to the word "dog" in an NLP search.

Once a movie such as "Lassie" is ingested and/or processed by the enrichment engine, additional vectors representing the additional descriptions such as "lost dog", "runaway dog", "missing dog" are added along with the vector representing "Lassie" to the vector space 300A and a vector space 300B in Figure 3B shows the result of the updated vector space in accordance with some embodiments. As shown in Figure 3B, the additional or updated vectors represent the closer associations and/or correlations between the vector representing "dog" and the vectors representing "lost" and "missing". As a result, using search phrases such as "lost dog", "missing dog", and/or "runaway dog", etc., the enhanced NLP search engine can locate not only the movie "Lassie" but also movies similar to the movie "Lassie" from the updated model. Additionally, because the vectors representing "dog", "cat", and "animal" are close in distance, movies related to "lost cat", "lost fish" (e.g., "Finding Nemo"), or "lost animal" are also moved closer to the vectors representing "Lassie", "lost dog", "missing dog", "run away dog" in the vector 300B. As such, depending on the criteria used by the results processor 139 (Figure 1), a search for "lost animal" may return both "Lassie" and "Finding Nemo".

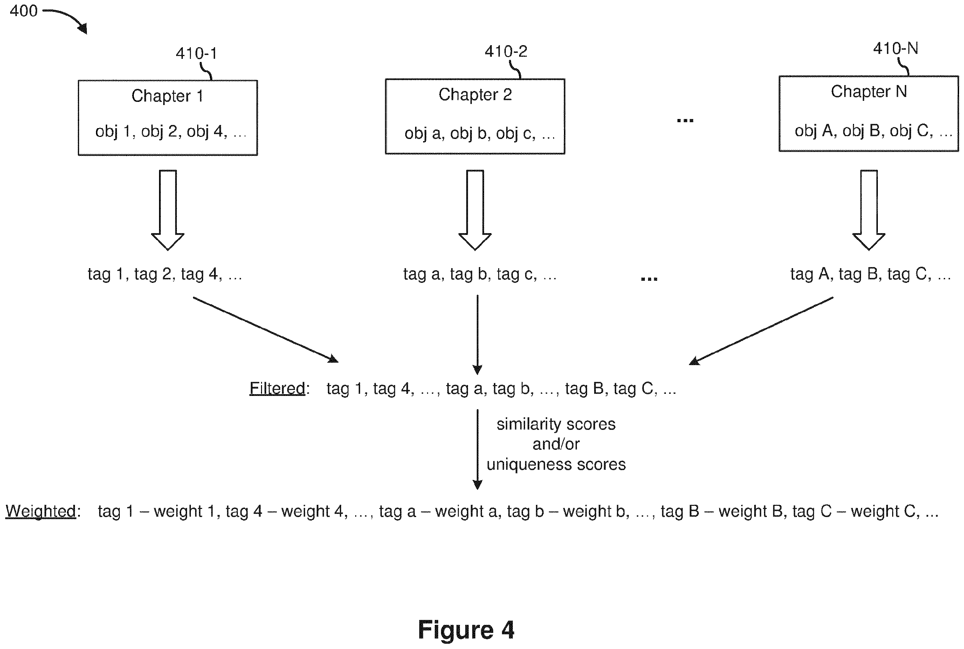

Figure 4 is a diagram 400 illustrating analyzing media content (e.g., by a sub engine 122 of the enrichment engine 120 in Figure 1) and deriving metadata for retraining the model (e.g., the model 132 in Figure 1) of the enhanced NLP search engine 130 (Figure 1) in accordance with some embodiments. In some embodiments, to detect the additional uniqueness among similar assets beyond what is available in the text, videos are processed where objects, locations, and/or people are identified and extracted as metadata for the search model. As such, tags associated with objects in the videos are added to the enhanced NLP search engine during the retraining.

For example, by analyzing objects in a series of videos, the enrichment engine segments the series into chapters or episodes, e.g., chapter 1 410-1, chapter 2 410-2, ..., chapter N 410-N, collectively referred to hereinafter as the chapters 410. In some embodiments, the enrichment engine uses any image processing techniques to identify objects in each chapter 410, e.g., identifying object 1, object 2, object 3, ... in chapter 1 410-1, identifying object a, object b, object c, ... in chapter 2 410-2, and/or identifying object A, object B, object C, ... in chapter 3 410-3, etc. Further, using any image processing techniques, the enrichment engine labels the identified objects with tags, e.g., generating tag 1, tag 2, tag 3, ... for object 1, object 2, object 3, etc., generating tag a, tag b, tag c, ... for object a, object b, object c, etc., and/or generating tag A, tag B, tag C, ... for object A, object B, object C, etc. Further, in some embodiments, the enrichment engine applies filters to remove the metadata that are associated with similar scene descriptions, e.g., removing tag 2, tag c, and tag a during the filtering processing. Additionally, in some embodiments, weights are added that are based on the number of similar descriptions, the similarity of the descriptions to the existing metadata descriptions, and/or the uniqueness of the descriptions as compared to other descriptions that exist in the entire corpus (the uniqueness relative to the vectors 134 in Figure 1).

In some embodiments, the tags along with the weights are added to the model 132 (Figure 1) during the retraining to allow the user to search for specific scenes where the objects exist even without any of the metadata describing them during the initial training. For example, by analyzing the objects in the Mr. Bean series, even without any metadata available during the initial training based on the information obtained by the ingestor 110 (Figure 1), the enrichment engine can generate tags and weights so that the user can search for specific scenes in which the objects exist. Accordingly, search phrases such as "Mr bean alarm", "Mr Bean Dentist", "Mr Bean toy boat" can return the specific episode (and/or the position) from the series. Moreover, a search for "a chair on a car" can also return the specific episode (and/or the position) from the series. Additionally, adding the tags associated with objects identified in the scenes to the model, e.g., landmarks such as Alps or Eiffel Tower, famous characters or actors, or famous songs, etc., allows the user to search for the scenes having the objects.

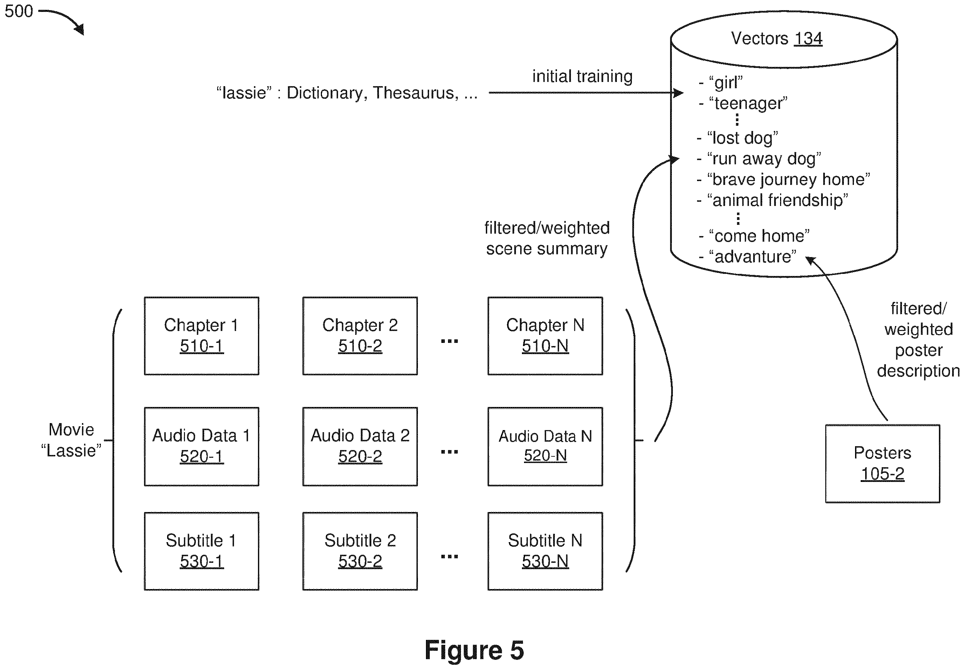

Figure 5 is a diagram 500 illustrating training and retraining the model (e.g., the model 132 in Figure 1) of the enhanced NLP search engine 130 (Figure 1) upon ingesting media content and media content metadata in accordance with some embodiments. As described above, previously existing NLP models are typically trained for a specific language and/or use certain types of documents such as publications. A term such as "lassie" may have a vector representation in the vectors repository 134 associated with dictionary and/or thesaurus definitions such as "girl" or "teenager". Using a search engine with a general pretrained model, search phrases such as "lost dog", etc. would not provide a movie titled "Lassie" as the search result.

In some embodiments, the enhanced NLP search engine 130 segments the video assets into chapters 510 (e.g., chapter 1 510-1, chapter 2 510-2, ..., chapter N 510-N) as described above with reference to Figure 4. Further, in some embodiments, the enhanced NLP search engine (e.g., one sub engine 122 of the enrichment engine 120, Figure 1) locates the corresponding audio data 520 (e.g., audio data 1 520-1 for chapter 1 510-1, audio data 2 520-2 for chapter 2 510-2, ..., audio data N 520-N for chapter N 510-N) and/or subtitle data 530 (e.g., subtitle data 1 530-1, subtitle data 2 530-2, ..., subtitle data N 530-N) and generates short descriptions of the chapters 510. The enhanced NLP search engine then adds additional vectors into the vectors repository 134 representing the short descriptions and/or updating the vectors representing the short description as described above with reference to Figures 3A and 3B. As such, vectors representing metadata derived from the scenes such as "lost dog", "brave journey home", and/or "animal friendship" are included in the vectors repository 134 with weights reflecting similarity or uniqueness of such vectors. In some embodiments, the enhanced NLP search engine also processes the posters 105-2 and derives short descriptions as the metadata from the posters 105-2. As such, vectors representing short descriptions such as "coming home", "adventure", etc. are also added to the vectors repository 134 and/or updated in the vectors repository 134 with weights in the model 132 (Figure 1) reflecting correlations, similarity, and/or uniqueness of such vectors. In some embodiments, the collection of the short descriptions, whether from processing the videos or from the posters 105-2, is filtered before being included in the vectors repository 134.

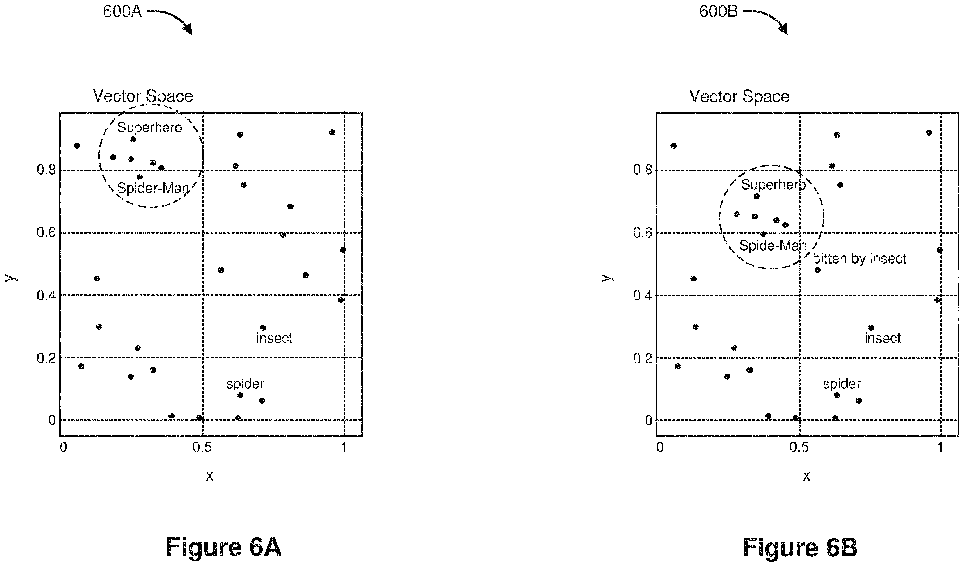

Figures 6A and 6B illustrate vector space 600A and vector space 600B before and after retraining the model 132 of the enhanced NLP search engine 130 (Figure 1) based on user feedback in accordance with some embodiments. As described above, the heart of the enhanced NLP search engine is the model that is used to build vector representation of the text (e.g., data in the movie assets). In some embodiments, the model is retrained on relevancy based on feedback, e.g., what resulted in actual playbacks. For example, in the vector space 600A, based on the correlations among the vectors representing "Spider-Man", "spider", and "insect", the enhanced NLP search engine provides the movie "Spider-Man" and other videos related to insects in response to a search phrase "bitten by insect".

As shown in Figure 6B, in some embodiments, user inputs such as the search phrase "bitten by insect" are added to the vector space 600B. Further, in some embodiments, a user selection such as the movie "Spider-Man" in the search results is provided to the enhanced NLP search engine as feedback, e.g., stored in the feedback database 137 (Figure 1). In some embodiments, the enhanced NLP search engine uses the feedback to retrain the model so that the model re-establishes correlations of vectors in the vector space 600B with vectors representing "bitten by insect" and "Spider-Man". In some embodiments, the enhanced NLP search engine modifies the model and rebuilds the model to update the representation vector(s) in the vector space. As shown in the vector space 600B outputted from the modified model, the vector representing the movie "Spider-Man" is closer to the vector representing "bitten by insect". Further as shown in the vector space 600B, in some embodiments, other vectors that were close to the vector representing the movie "Spider-Man" are also modified (e.g., the vector representing a "superhero" movie) so that they are closer to the vector representing "bitten by insect".

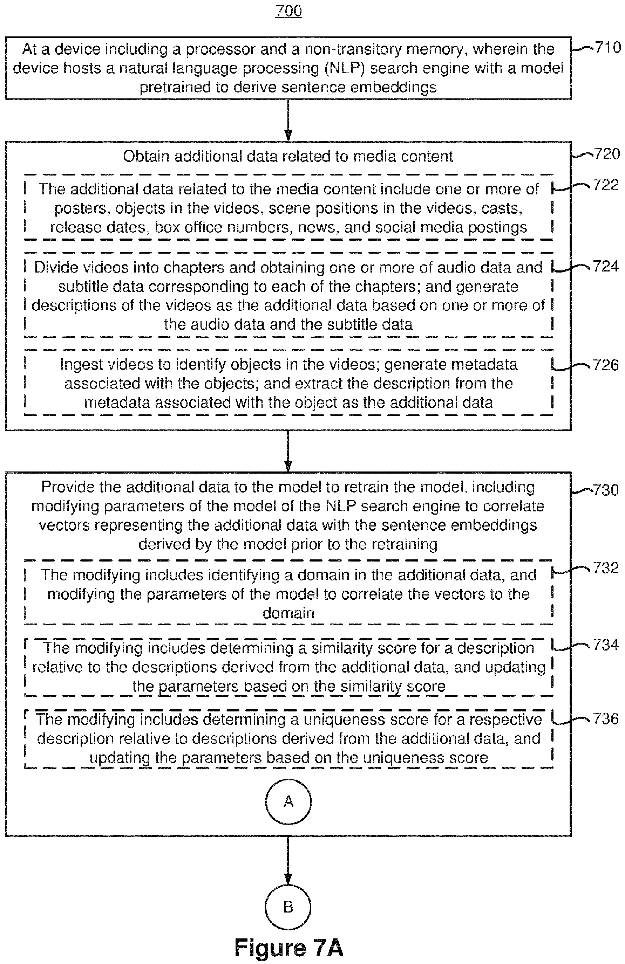

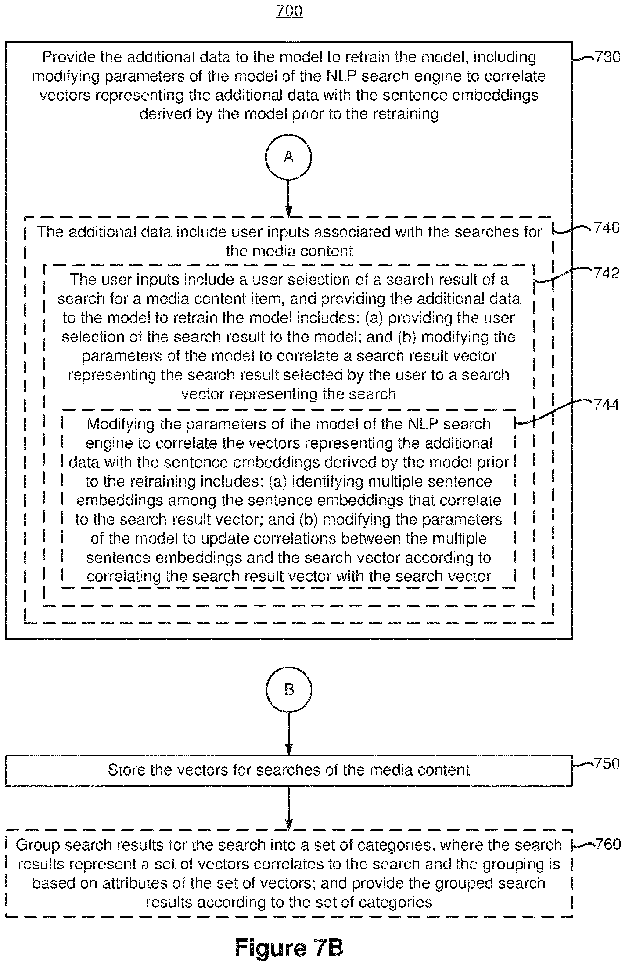

Figures 7A and 7B are flow diagrams illustrating an enhanced NLP search method 700 for video content searches in accordance with some embodiments. As represented by block 710 in Figure 7A, in some embodiments, the method 700 is performed at a device that includes a processor and a non-transitory memory, where the device hosts a natural language processing (NLP) search engine with a model, e.g., the device hosting the enhanced NLP search engine 130 (Figure 1). In some embodiments, the model is pretrained to derive sentence embeddings, e.g., the model being a SBERT model or any other pretrained NLP model(s).

The method 700 begins with the enhanced NLP search engine obtaining additional data related to media content as represented by block 720. In some embodiments, as represented by block 722, the additional data related to the media content include one or more of posters, objects in the videos, scene positions in the videos, casts, release dates, box office numbers, news, and social media postings. For example, in Figure 1, the enhanced NLP search engine 130 obtains information related to the media content from the plurality of sources 101, e.g., obtaining media content metadata as the additional data from source 1 101-1, obtaining casts, biographies, plot summaries, trivia, ratings, news, and/or reviews as the additional data from source 2 101-2, obtaining dictionary, thesaurus, and/or encyclopedia definitions and/or descriptions as the additional data from source 3 101-3, or subtitles and/or transcripts as the additional data from source 4 101-4, or objects metadata as the additional data from source 5 101-5. Also as shown in Figure 1, the enhanced NLP search engine 130 also obtains the information related to the videos as the additional data from the additional sources such as the origin 105-1 and posters 105-2. In some embodiments, the enhanced NLP search engine obtains the additional data directly from the sources and/or the additional sources. In some other embodiments, the enhanced NLP search engine obtains the additional data indirectly by extracting the metadata from the information received from the sources and/or the additional sources, e.g., what people are writing about a movie in social media postings.

As represented by block 724, in some embodiments, to extract the metadata from the information received from the sources and/or the additional sources, obtaining the additional data related to the media content includes dividing videos into chapters and obtaining one or more of audio data and subtitle data corresponding to each of the chapters, and generating descriptions of the videos as the additional data based on one or more of the audio data and the subtitle data. For example, as shown in Figure 5, the enhanced NLP search engine ingests a video and divides the video into chapters 510. Further as shown in Figure 5, the enhanced NLP search engine obtains the audio data 520 and/or the subtitles 530 corresponding to the chapters 510 and generates the descriptions based on the audio data 520 and/or the subtitles 530 for modifying the model of the enhanced NLP search engine.

In some embodiments, to extract the metadata from the information received from the sources and/or the additional sources, as represented by block 726, obtaining the additional data related to the media content includes ingesting videos to identify objects in the videos, generating metadata associated with the objects, and extracting descriptions from the metadata associated with the object as the additional data. For example, as shown in Figure 4, the enhanced NLP search engine ingests a video and analyzes the video to identify objects. Further, the enhanced NLP search engine generates the tags as the metadata and extracts the descriptions from the metadata that describe properties associated with the objects, such as locations (e.g., Alps or Eiffel Tower) and/or people identified in the objects. The descriptions allow users to search for specific scenes and/or locations within the video where the objects associated with the scenes exist but the metadata describing the scenes did not exist from other sources, e.g., the specific scene description not available from the sources such as video metadata, film databases, references, etc.

The method 700 continues, as represented by block 730, with the enhanced NLP search engine providing the additional data to the model to retrain the model, including modifying parameters of the model of the NLP search engine to correlate vectors representing the additional data with the sentence embeddings derived by the model prior to the retraining. In some embodiments, as represented by block 732, modifying the parameters of the model includes identifying a domain in the additional data, and modifying the parameters of the model to correlate the vectors to the domain. For example, in Figure 2, the ingestor 110 of the enhanced NLP search engine identifies the domains 210 such as the casts, the release dates, and/or the box office numbers, etc. Further as shown in Figure 2, the enhanced NLP search engine uses the information from the domains 210 to retrain the model so that the vectors in the vector space 220 are associated with the domains 210. As such, the retrained model allows the enhanced NLP search engine to return more relevant results based on domain specific information, e.g., recently released popular movies with famous cast members.

In some embodiments, as represented by block 734, modifying the parameters of the model includes determining a similarity score for a respective description relative to descriptions derived from the additional data, and updating the parameters based on the similarity score. In some embodiments, as represented by block 736, modifying the parameters of the model includes determining a uniqueness score for a respective description relative to descriptions derived from the additional data, and updating the parameters based on the uniqueness score. For example, in Figure 4, the enhanced NLP search engine collects the tags and filters the tags based on similar descriptions. Further as shown in Figure 4, the enhanced NLP search engine applies weights to the tags based on the number of similar descriptions, the similarities of the descriptions to the existing movie metadata descriptions, and/or the uniqueness of the descriptions of a particular movie relative to other descriptions that exist in the entire corpus.

Turning to Figure 7B, as represented by block 740, in some embodiments, the additional data include user inputs associated with the searches for the media content. In such embodiments, as represented by block 742, when the user inputs include a user selection of a search result of a search for a media content item, providing the additional data to the model to retrain the model includes: (a) providing the user selection of the search result to the model; and (b) modifying the parameters of the model to correlate a search result vector representing the search result selected by the user to a search vector representing the search. Also in such embodiments, as represented by block 744, modifying the parameters of the model of the NLP search engine to correlate the vectors representing the additional data with the sentence embeddings derived by the model prior to the retraining includes: (a) identifying multiple sentence embeddings among the sentence embeddings that correlate to the search result vector; and (b) modifying the parameters of the model to update correlations between the multiple sentence embeddings and the search vector according to correlating the search result vector with the search vector.

For example, as shown in Figures 6A and 6B, the enhanced NLP search engine receives the user inputs such as the search phrase "bitten by insect" as well as the user selection of the movie "Spider-Man" from the search result. The enhanced NLP search engine provides the user inputs to the model, retrains the model by updating the parameters and/or weights in the model, so that the model is updated with better correlations, e.g., the search vector representing the search phrase "bitten by insect" and the search result vector representing the search result "Spider-Man" are better correlated in the vector space. As such, the model of the enhanced NLP search engine is a learning model that is also based on feedback and can be retrained for better correlation of data. Further, as shown in Figures 6A and 6B, according to the user selection of the movie "Spider-Man", the enhanced NLP search engine modifies the model so that correlations between vectors representing other superhero movies and the search vector representing "bitten by insect" are updated similar to the updated correlations between the search result vector representing "Spider-Man" and the search vector "bitten by insect" in the vector space 600B, e.g., by also moving the multiple vectors representing other superhero movies closer to the search string vector "bitten by insect". As such, the selection by the user to play the movie "Spider-Man" as user feedback triggers the retraining of the model and the re-generation of the representation vectors in the vector space so that the enhanced NLP search engine is more aware of the correlations between "bitten by insect" to movies such as "Spider-Man" and/or other superhero movies.

Still referring to Figure 7B, as represented by block 750, the method 700 continues with the enhanced NLP search engine storing the vectors for searches of the media content. In some embodiments, as represented by block 760, the method 700 further includes grouping search results for the search into a set of categories, where the search results represent a set of vectors correlating to the search and the grouping is based on attributes of the set of vectors, and providing the grouped search results according to the set of categories. For example, in Figure 1, the results processor 139 divides the search results based on attributes of the vectors, such as the filming location and/or release date, etc., analyzes the common grouping among the results, and provides the grouped the search results according to the categories. As such, the search results provided to the client device 140 are segmented, categorized, ranked, and/or filtered.

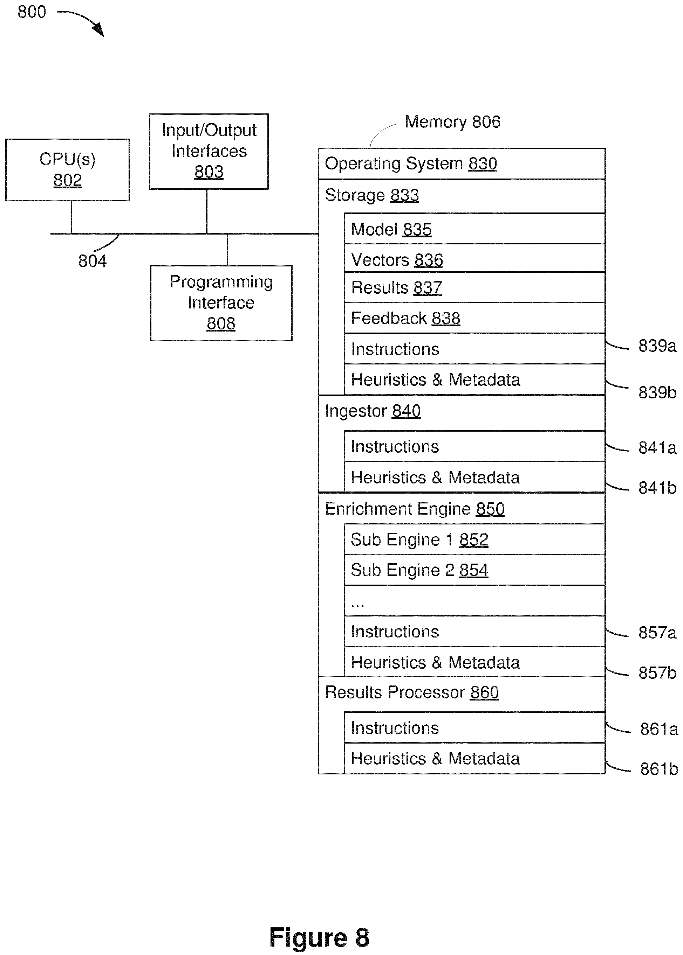

Figure 8 is a block diagram of a computing device 800 for enhanced media content searches in accordance with some embodiments. In some embodiments, the computing device 800 performs one or more functions of the enhanced NLP search engine 130 (Figure 1) and/or the results processor 139 (Figure 1) and performs one or more of the functionalities described above with respect to the enhanced NLP search engine 130 and/or the results processor 139. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 800 includes one or more processing units (CPUs) 802 (e.g., processors), one or more input/output interfaces 803 (e.g., input devices, sensors, a network interface, a display, etc.), a memory 806, a programming interface 808, and one or more communication buses 804 for interconnecting these and various other components.

In some embodiments, the communication buses 804 include circuitry that interconnects and controls communications between system components. The memory 806 includes high-speed random access memory, such as DRAM, SRAM, DDR RAM or other random access solid state memory devices; and, in some embodiments, include non-volatile memory, such as one or more magnetic disk storage devices, optical disk storage devices, flash memory devices, or other non-volatile solid state storage devices. The memory 806 optionally includes one or more storage devices remotely located from the CPU(s) 802. The memory 806 comprises a non-transitory computer readable storage medium. Moreover, in some embodiments, the memory 806 or the non-transitory computer readable storage medium of the memory 806 stores the following programs, modules and data structures, or a subset thereof including an optional operating system 830, a storage module 833, an ingestor 840, an enrichment engine 850, and a results processor 860. In some embodiments, one or more instructions are included in a combination of logic and non-transitory memory. The operating system 830 includes procedures for handling various basic system services and for performing hardware dependent tasks.

In some embodiments, the storage module 833 stores parameters of a model 835 (e.g., the model 132, Figure 1), vectors 836 generated by the model 835 (e.g., the vectors stored in the vectors repository 134 in Figures 1 and 5), search results 837 (e.g., the results database 135, Figure 1), and user feedback of searches 838 (e.g., the feedback database 137, Figure 1). To that end, the storage module 833 includes a set of instructions 839a and heuristics and metadata 839b.

In some embodiments, ingestor 840 (e.g., the ingestor 110, Figures 1 and 2) is configured to ingest addition data related to media content. To that end, the ingestor 840 includes a set of instructions 841a and heuristics and metadata 841b.

In some embodiments, the enrichment engine 850 (e.g., the enrichment engine 120 in Figure 1) is configured to process media content and derive the additional data related to the media content. In some embodiments, the enrichment engine 850 includes multiple sub engines for processing different types of media content, e.g., sub engine 1 852 such as sub engine 1 122-1 in Figure 1, sub engine 2 854 such as sub engine 2 122-2 in Figure 1, etc. To that end, the enrichment engine 850 includes a set of instructions 857a and heuristics and metadata 857b.

In some embodiments, the results processor 860 (e.g., the results processor 139, Figure 1) is configured to segments the search results into categories. To that end, the results processor 860 includes a set of instructions 861a and heuristics and metadata 861b.

Although the storage module 833, the ingestor 840, the enrichment engine 850, and the results processor 860 are illustrated as residing on a single computing device 800, it should be understood that in other embodiments, any combination of the storage module 833, the ingestor 840, the enrichment engine 850, and the results processor 860 can reside in separate computing devices in various embodiments. For example, in some embodiments, each of the storage module 833, the ingestor 840, the enrichment engine 850, and the results processor 860 resides on a separate computing device.

Moreover, Figure 8 is intended more as functional description of the various features which are present in a particular implementation as opposed to a structural schematic of the embodiments described herein. As recognized by those of ordinary skill in the art, items shown separately could be combined and some items could be separated. For example, some functional modules shown separately in Figure 8 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first device could be termed a second device, and, similarly, a second device could be termed a first device, which changing the meaning of the description, so long as all occurrences of the "first device" are renamed consistently and all occurrences of the "second device" are renamed consistently. The first device and the second device are both devices, but they are not the same device.

The terminology used herein is for the purpose of describing particular embodiments only and is not intended to be limiting of the claims. As used in the description of the embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting", that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a device including a processor and a non-transitory memory, wherein the device hosts a natural language processing (NLP) search engine with a model pretrained to derive sentence embeddings:
obtaining additional data related to media content;
providing the additional data to the model to retrain the model, including modifying parameters of the model of the NLP search engine to correlate vectors representing the additional data with the sentence embeddings derived by the model prior to the retraining; and
storing the vectors for searches of the media content.

2. The method of claim 1, wherein modifying the parameters of the model of the NLP search engine to correlate the vectors representing the additional data with the sentence embeddings derived by the model prior to the retaining includes:
determining a similarity score for a respective description relative to descriptions derived from the additional data; and
updating the parameters based on the similarity score.

3. The method of claim 1, wherein modifying the parameters of the model of the NLP search engine to correlate the vectors representing the additional data with the sentence embeddings derived by the model prior to the retaining includes:
determining a uniqueness score for a respective description relative to descriptions derived from the additional data; and
updating the parameters based on the uniqueness score.

4. The method of claim 1, further comprising:
grouping the vectors into a set of categories based on correlation values; and
providing search results corresponding to the vectors according to the set of categories.

5. A device hosting a natural language processing (NLP) search engine with a model pretrained to derive sentence embeddings, the device comprising:
a processor;
a non-transitory memory; and
one or more programs stored in the non-transitory memory, which, when executed by the processor, cause the device to:
obtain additional data related to media content;
provide the additional data to the model to retrain the model, including modifying parameters of the model of the NLP search engine to correlate vectors representing the additional data with the sentence embeddings derived by the model prior to the retraining; and
store the vectors for searches of the media content.

6. The method of claim 1 or the device of claim 5, wherein the additional data related to the media content include one or more of posters, objects in the media content, scene positions in the media content, casts, release dates, box office numbers, news, and social media postings.

7. The method of claim 1 or the device of claim 5, wherein obtaining the additional data related to the media content includes:
dividing videos into chapters and obtaining one or more of audio data and subtitle data corresponding to each of the chapters; and
generating descriptions of the videos as the additional data based on one or more of the audio data and the subtitle data.

8. The method of claim 1 or the device of claim 5, wherein obtaining the additional data related to the media content includes:
ingesting videos to identify objects in the videos;
generating metadata associated with the objects; and
extracting descriptions from the metadata associated with the object as the additional data.

9. The method of claim 1 or the device of claim 5, wherein modifying the parameters the model of the NLP search engine to correlate the vectors representing the additional data with the sentence embeddings in the models prior to the retraining includes:
identifying a domain in the additional data; and
modifying the parameters of the model to correlate the vectors to the domain.

10. The method of claim 1 or the device of claim 5, wherein the additional data include user inputs associated with the searches for the media content.

11. The method of claim 10 or the device of claim 10, wherein the user inputs include a user selection of a search result of a search for a media content item, and providing the additional data to the model to retrain the model includes:
providing the user selection of the search result to the model; and
modifying the parameters of the model to correlate a search result vector representing the search result selected by the user to a search vector representing the search.

12. The method of claim 11 or the device of claim 11, wherein modifying the parameters of the model of the NLP search engine to correlate the vectors representing the additional data with the sentence embeddings derived by the model prior to the retraining includes:
identifying multiple sentence embeddings among the sentence embeddings that correlate to the search result vector; and
modifying the parameters of the model to update correlations between the multiple sentence embeddings and the search vector according to correlating the search result vector with the search vector.

13. A non-transitory memory storing one or more programs, which, when executed by a processor of a device, wherein the device hosts a natural language processing (NLP) search engine with a model pretrained to derive sentence embeddings, cause the device to:
obtain additional data related to media content;
provide the additional data to the model to retrain the model, including modifying parameters of the model of the NLP search engine to correlate vectors representing the additional data with the sentence embeddings derived by the model prior to the retraining; and
store the vectors for searches of the media content.
content.
